(19) **Europäisches Patentamt**

**European Patent Office**

**Office européen des brevets**

(11) **EP 0 847 302 B1**

(12) **EUROPEAN PATENT SPECIFICATION**

(45) Date of publication and mention
of the grant of the patent:
**19.04.2000 Bulletin 2000/16**

(51) Int Cl.⁷: **B01J 2/00**

(21) Application number: **96928990.9**

(22) Date of filing: **21.08.1996**

(86) International application number:
**PCT/US96/13582**

(87) International publication number:
**WO 97/07879 (06.03.1997 Gazette 1997/11)**

(54) **APPARATUS AND PROCESS FOR COATING A SOLID PARTICLE**

VORRICHTUNG UND VERFAHREN ZUR BESCHICHTUNG EINES FESTPARTIKELS

APPAREIL ET PROCEDE D'ENROBAGE D'UNE PARTICULE SOLIDE

(84) Designated Contracting States:
**DE ES FR GB IT**

(30) Priority: **29.08.1995 US 2896 P**

(43) Date of publication of application:
**17.06.1998 Bulletin 1998/25**

(73) Proprietor: **E.I. DU PONT DE NEMOURS AND COMPANY**
**Wilmington Delaware 19898 (US)**

(72) Inventor: **SCHURR, George, Alan**
**Newark, DE 19711-2069 (US)**

(74) Representative: **Jones, Alan John et al**
**CARPMAELS & RANSFORD**
**43 Bloomsbury Square**
**London, WC1A 2RA (GB)**

(56) References cited:
**EP-A- 0 435 426**      **DE-A- 2 429 630**
**US-A- 3 704 786**      **US-A- 4 592 302**

**Description**

## BACKGROUND OF THE INVENTION

1. Field of the Invention

This invention relates to a process for uniformly coating, or encapsulating, a solid particle. More specifically, this invention relates to a process for coating a solid particle with either a melt or a solid, by respectively metering a melt, a solution in which a solid is dissolved or a slurry in which a solid is undissolved.

2. Description of the Related Art

Methods and apparatus for coating particles which use heated gas are known in the art. For example, U.S. Patent No. 4,784,878 to Haak discloses a method of applying a coating of a non-volatile substance, such as lecithin, to a solid particle. In Haak, there is a concurrent flow of the atomized liquid/solid mixture, hot gas and an atomized liquid containing lecithin. The atomized liquid containing liquid ultimately comes into contact with the solid particle of the liquid/solid mixture, and exterior coating of the solid particle with lecithin occurs. Thus, the solid which was part of the mixture is coated. This method is inefficient in that it requires the particles which are coated to be mixed with a liquid and the liquid to be subsequently evaporated in order to recover the particles.

It is especially difficult to coat very small particles, such as a powdery or granular material. A method using heated gas for coating such particles is described in U.S. Patent No. 5,075,138 to Tanaka et al. In this patent, hot air is supplied to a region spaced in the downstream direction from a region where the powdery or granular material and a coating liquid collide with each other. With this method, the mechanism for transforming the coating liquid to a solid coating is not particularly efficient, since most of the coating liquid ends up in the liquid phase, and not in the solid phase as the coating on the powdery or granular material. Consequently, the resultant yield of coated powdery or granular material is not high, and both coating liquid.and the powdery or granular material are wasted.

Mixing one material with a particulate material in a zone of turbulence is disclosed in U.S. Patent No. 4,430,001 to Schurr. However, the one material is 0.05%-6% by weight based on the mixture, and thus does not encapsulate the particulate material.

Thus, there exists a need for developing a process for coating solid particles, and in particular, small particles, such as powdery or granular materials, which process is efficient and economical.

## SUMMARY OF THE INVENTION

The present invention solves the problems of the prior art associated with uniformly and completely coating, or encapsulating, a solid particle. In particular, the process of the present invention provides a mechanism for coating particles which requires only a short residence time in a mixing area, or zone of turbulence. This reduces the time and hence, the cost, of coating particles.

In addition, the present invention provides a mechanism for coating small particles, such as powdery or granular materials, where the yield of uniformly and completely coated particles is high. Thus, little of the coating material and the solid particles is wasted, which reduces the cost of coating particles.

Moreover, the present invention provides methods for coating a solid particle with either a melt or a solid, by respectively metering a melt, a solution in which a solid is dissolved, or a slurry, in which a solid is undissolved. This allows a variety of solid particles to be coated with a variety of materials, thereby exceeding the versatility of known coating methods of the prior art.

To achieve the objects and in accordance with purposes of the invention, as embodied and broadly described herein, there is provided a process for coating a solid particle with a coating material as set forth in Claim 1.

Preferred embodiments of the process of the present invention are set forth in Claims 2 to 13.

The liquid composition may be a solution, in which the coating material is dissolved in a liquid or a slurry, in which the coating material is not dissolved in a liquid. Alternatively, the liquid composition may comprise a melt.

## BRIEF DESCRIPTION OF THE DRAWINGS

Fig. 1 is a schematic diagram of a portion of apparatus used in the process of the present invention.

Fig. 2 is a cut-away, expanded, cross-sectional view of a portion of the apparatus shown in Fig. 1.

## DETAILED DESCRIPTION OF THE PREFERRED EMBODIMENTS

Reference will not be made in detail to the present preferred embodiments of the invention, an example of which is illustrated in the accompanying drawings. Wherever possible, the same reference numbers will be used throughout the drawings to refer to the same or like parts.

The present invention provides a process for coating a solid particle with a coating material. By coating is meant adhering a layer of one substance onto the surface of a solid particle, and includes encapsulation of substantially all, or all, the surface of the solid particle.

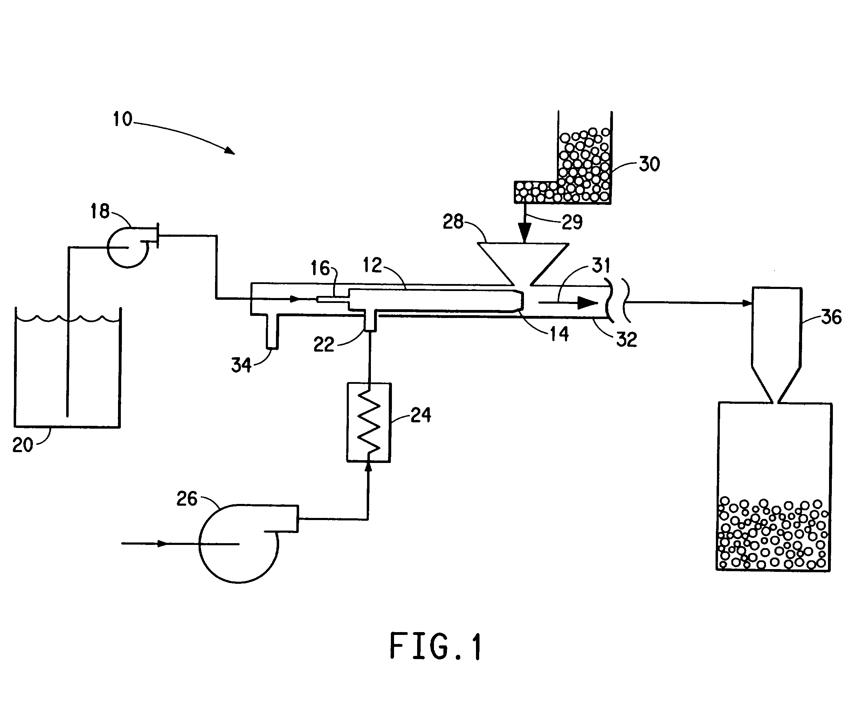

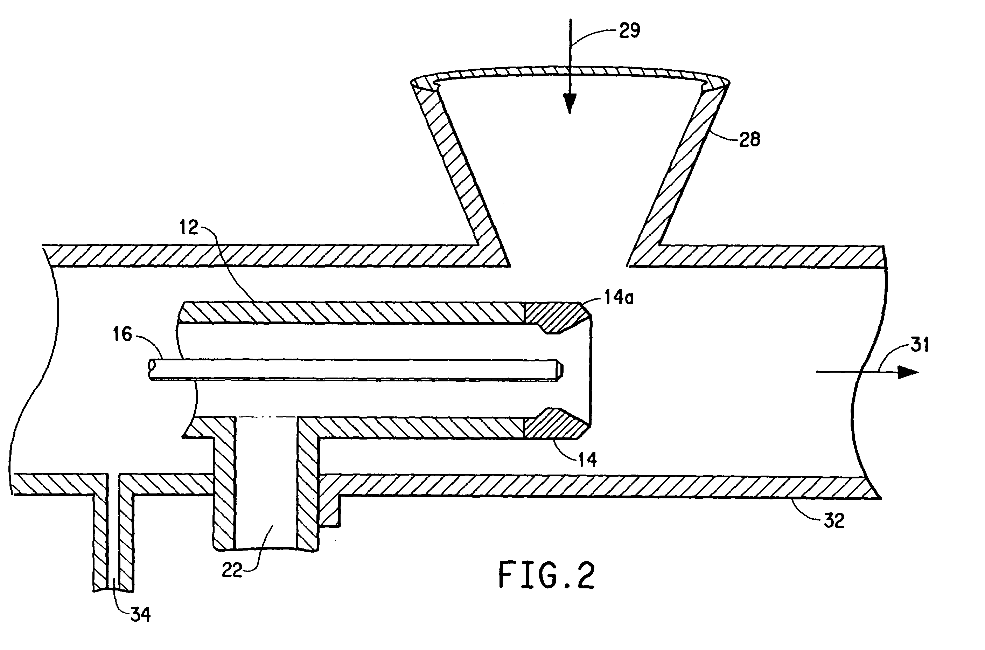

An apparatus for use in the process of the present invention is shown generally at 10 in Fig. 1. The apparatus comprises a first chamber, shown at 12 in Figs. 1 and 2. A flow restrictor 14 is disposed at one end of the first chamber. The flow restrictor is typically disposed at the downstream end of the first chamber, as shown in Figs. 1 and 2. Flow restrictor 14 has an outlet end 14a, as shown in the detailed view of Fig. 2. Although the flow restrictor is shown as a different element from the first chamber, it may be formed integrally therewith, if desired. The flow restrictor may have various configurations, as long as it serves to restrict flow and thereby increase the pressure of the fluid passing through it. Typically, the flow restrictor of the present invention is a nozzle.

A first (or liquid) inlet line 16 as shown in Figs. 1 and 2 is disposed in fluid communication with the first chamber for metering a liquid composition into the chamber. Liquid inlet line 16 meters the liquid composition into first chamber 12 in the outlet of flow restrictor 14, and preferably in the center of the flow restrictor when viewed along the axial length thereof. The liquid composition is metered through liquid inlet line 16 by a metering pump 18 from a storage container 20 containing the liquid composition as shown in Fig. 1. The liquid composition may be a solution, where a solid which is used as the coating material is dissolved in a liquid, or a slurry, where a solid which is used as the coating material is undissolved in a liquid. Alternatively, the liquid composition may be a melt, which is used as the coating material. By melt is meant any substance at a temperature at or above it melting point, but below its boiling point. In any of these cases, the liquid composition may include components other than the coating material. It should be noted that when the liquid composition is a melt, storage container 20 must be heated to a temperature above the melt temperature of the liquid composition in order to maintain the liquid composition in melt form.

The apparatus for coating a solid particle further includes a second (or gas) inlet line 22 disposed in fluid communication with the first chamber as shown in Figs. 1 and 2. Generally, the second inlet line should be disposed in fluid communication with the first chamber upstream of the flow restrictor. Second inlet line 22 injects a first gas stream through the flow restrictor to create a zone of turbulence at the outlet of the flow restrictor. The turbulence subjects the liquid composition to shear forces that atomize the liquid composition.

The first gas stream should have a stagnation pressure sufficient to accelerate the gas to at least one-half the velocity of sound, or greater, prior to entering the flow restrictor to ensure that a zone of turbulence of sufficient intensity will be formed at the outlet of the flow restrictor. The velocity of sound for a particular gas stream, e.g., air or nitrogen, will be dependent on the temperature of the gas stream. This is expressed by the equation for the speed of sound, c:

$$c = \sqrt{kgRT} \qquad\qquad (1)$$

where:

    k = ratio of specific heats for the gas
    g = acceleration of gravity
    R = universal gas constant
    T = absolute temperature of the gas

Thus, the acceleration of the first gas stream is dependent on the temperature of the gas stream.

As noted above, it is the pressurized gas that causes the atomization of the liquid composition. The pressure of the liquid composition in the liquid inlet line just needs to be enough to overcome the system pressure of the gas stream. It is preferable that the liquid inlet line has an extended axial length before the zone of turbulence. If the liquid inlet line is too short, the flow restrictor becomes plugged.

The apparatus also comprises means disposed in the second inlet line and upstream of the flow restrictor for heating the first gas stream prior to injection through the flow restrictor. Preferably, the heating means comprises a heater 24 as shown in Fig. 1. Alternatively, the heating means may comprise a heat exchanger, a resistance heater, an electric heater, or any type of heating device. Heater 24 is disposed in second inlet line 22. A pump 26 as shown in Fig. 1 conveys the first gas stream through heater 24 and into first chamber 12. When a melt is used as the coating material, the gas stream should be heated to a temperature at or above the melt temperature of the melt, to keep the melt in liquid (i.e., melt) form. When using a melt, it is also helpful if auxiliary heat is provided to the first inlet line which supplies the melt prior to injection, to prevent pluggage of the line.

The apparatus further includes a hopper 28 as shown in Figs. 1 and 2. Hopper 28 introduces a solid particle to the zone of turbulence. It is preferable that the outlet end of the flow restrictor is positioned in the first chamber beneath the hopper at the center line of the hopper. This serves to ensure that the solid particles are introduced directly into the zone of turbulence. This is important because, as noted above, the turbulence subjects the liquid composition to shear forces that atomize the liquid composition. It also increases operability by providing a configuration for feeding the solid particles most easily. In addition, the shear forces disperse and mix the atomized liquid composition with the solid particles, which allows the particles to be coated. Hopper 28 may be fed directly from a storage container 30 as shown by arrow 29 in Fig. 1. The hopper may include a metering device for accurately metering the particles at a particular ratio to the liquid feed from liquid inlet line 16 into the zone of turbulence. This metering establishes the level of coating on the solid particle. Typically, the hopper is open to the atmosphere. When a melt is used, it is preferred that the solid particles are at ambient temperature because this facilitates solidification of the melt after the melt, which is initially at a higher temperature, coats the solid particle in the zone of turbulence.

The apparatus may further include a second chamber 32 surrounding the first chamber as shown in Figs. 1 and 2. In addition, the second chamber encloses the zone of turbulence. Second chamber 32 has an inlet 34 for introducing a second gas stream into the second chamber. The inlet of the second chamber is preferably positioned at or near the upstream end of second chamber 32. The outlet of second chamber 32 is connected to a collection container, such as that shown at 36 in Fig. 1. The second gas stream cools and conveys the coated solid particles toward the collection container as illustrated by arrow 31 in Fig. 2. In particular, when a solution or slurry is used, the solid of the solution or slurry cools between the zone of turbulence and container so that by the time the particle reaches the container, a solid coating comprising the solid of the solution or slurry is formed on the particle. When a melt is used, the liquid composition cools between the zone of turbulence and the container so that by the time the particle reaches the container, a solid coating comprising the melt is formed on the particle. The first gas stream, as well as the second gas stream, are vented through the top of collection container 36.

For the configuration as shown in Figs. 1 and 2, inlet 34 may be connected to a blower, not shown, which supplies the second gas stream to the second chamber. However, the blower and second chamber 32 may be eliminated, and expansion of the first gas stream may be used to cool the particles and to convey them to container 36. In this case, the solid from the solution or slurry or the melt cools and solidifies on the particle in the atmosphere between the zone of turbulence and the collection container, and the coated particles fall into collection container 36.

It is preferable that the axial length of the zone of turbulence is about ten times the diameter of the second chamber. This allows the pressure at the outlet of the flow restrictor to be at a minimum. Solid particles are fed into second chamber 32 as shown in Figs. 1 and 2 near the outlet of the flow restrictor, which is preferably positioned at the center line of the hopper. If the pressure at the outlet is too great, the solid particles will back flow into the hopper.

The pressure of the second gas stream must be sufficient to assist in conveying the coated solid particles from the zone of turbulence to the collection zone, but should be at lower than the pressure of the first gas stream. This is because a high relative velocity difference between the first gas stream and the second gas stream produces a sufficient degree of turbulence to coat the solid particles.

It should be noted that the process of the present invention may be practiced using the apparatus illustrated in Figs. 1 and 2, although it should be understood that the process of the present invention is not limited to the illustrated apparatus. Moreover, it should be noted that while one pass, or cycle, of the process of the present invention completely coats, or encapsulates, the solid particle, more than one pass may be used to adhere additional coating material to the solid particle, depending on the desired thickness of the coating.

The process comprises the steps of metering a liquid composition into a flow restrictor, such as flow restrictor 14 as shown in Figs. 1 and 2. As described above for the apparatus, the liquid composition may be a solution, slurry or melt.

The process of the present invention further comprises injecting a gas stream, for instance from a gas inlet line such as that shown at 22 in Figs. 1 and 2, through the flow restrictor concurrently with metering the liquid composition into the flow restrictor, to create a zone of turbulence at the outlet of the flow restrictor. The shear in the zone of turbulence atomizes the liquid composition.

The gas stream is heated prior to injecting it through the flow restrictor. The gas stream may be heated by a heater, such as heater 24 as shown in Fig. 1. As noted above for the apparatus, when the liquid composition is a solution or a slurry, the gas stream is heated to a temperature sufficient to vaporize the liquid of the solution or slurry and to leave the solid of the solution or slurry remaining. When the liquid composition is a melt, the gas stream should be heated to a temperature at or above the melt temperature of the liquid composition, to keep the liquid composition, and in particular, the melt, in liquid (i.e., melt) form. As also noted above for the apparatus, when using a melt, it is also helpful if auxiliary heat is provided to the first inlet line which supplies the melt prior to injection, to prevent pluggage of the line.

The process of the present invention also comprises the step of adding a solid particle to the zone of turbulence concurrently with the metering of the liquid composition and the injection of the gas stream. This mixes the solid particle with the atomized liquid composition at the zone of turbulence. This mixing at the zone of turbulence coats the solid particle with the coating material. The solid is preferably metered in order to control the ratio of the solid and the liquid added at the zone of turbulence. This establishes the level of coating on the solid particle. When a solution or slurry is used, the heat from the heated gas stream serves to evaporate the liquid of the solution or slurry, leaving the solid of the solution or slurry remaining to coat the particle. The mixing at the zone of turbulence then coats the solid particle with the remaining solid from the solution or slurry. When a melt is used, the mixing at the zone of turbulence coats the solid particle with the melt.

As noted above, the zone of turbulence is formed by the action of injecting the gas at high pressure through the flow restrictor. As discussed above with respect to the apparatus, it is preferable that the gas stream is accelerated to at least about one-half the velocity of sound prior to injection to ensure that a zone of turbulence of sufficient intensity will be formed at the outlet of the flow restrictor.

The residence time of the particles in the zone of turbulence is determined by the geometry of the first chamber and the amount of gas injected from the gas inlet line. The average residence time of the solid particle within the zone of turbulence is preferably less than 250 milli-seconds. More preferably, the average residence time of the solid particle within the zone of turbulence is in the range of 25 to 250 milli-seconds. Short residence times can be achieved because of the action of the zone of turbulence. The short residence times make the process of the present invention advantageous compared to conventional coating processes because the time, and hence, the cost of coating particles, are reduced.

Typically, the solid particles are fed from a hopper, such as hopper 28 as shown in Figs. 1 and 2, which is open to the atmosphere. As noted above for the apparatus, when the liquid composition is a melt, it is preferred that the solid particles be at ambient temperature because this will facilitate solidification of the melt after the melt (which is initially at a higher temperature) coats the solid particle in the zone of turbulence.

The process of the present invention may further comprise the step of adding another gas stream upstream of the zone of turbulence for cooling and conveying the coated solid particle. This other gas stream is added through a chamber, such as second chamber 32 as shown in Figs. 1 and 2. As explained above for the apparatus, the pressure of the second gas stream must be sufficient to assist in conveying the coated solid particles from the zone of turbulence to the collection container, but should be at lower than the pressure of the first gas stream in order to achieve coating. When a solution or slurry is used, the solid of the solution or slurry cools and solidifies on the particle in the second chamber between the zone of turbulence and a collection container, such as collection zone 36 as described above. When a melt is used, the melt cools and solidifies on the particle in the second chamber between the zone of turbulence and the collection container. When a second chamber is not included, the solid or the melt cools and solidifies on the particle in the atmosphere between the zone of turbulence and the collection container, and the coated particles fall into the container.

The present invention will be clarified by the following Examples, which are intended to be purely exemplary of the invention.

## EXAMPLE 1

Dodecanedioic acid is a chemical intermediate which has a tendency to sublime at elevated temperatures. In order to inhibit this sublimation, DDDA was encapsulated with a glycidyl methacrylate, or GMA, co-polymer. Specifically, this Example is directed to the encapsulation of solid particle of dodecanedioic acid (DDDA) with a GMA co-polymer of glycidyl methacrylate, butyl methacrylate methyl methacrylate and styrene, which co-polymer is available from Anderson Development Company of Adrian, Michigan. The uncoated dodecanedioic acid solid particle had a mean particle size of 23.5 micrometers ($\mu$), and the coated dodecanedioic acid had a mean particle size of 26.2 micrometers ($\mu$).

Injector technology apparatus, such as that shown in Figs. 1 and 2, was used in order to encapsulate the DDDA with GMA co-polymer. The apparatus had a shear zone of one inch (2.54 cm.) in diameter. DDDA was dispersed using an Alpine 160z pin mill operated at 10,400 rpm to produce particles having a mean particle size of 23.5 micrometers ($\mu$). DDDA powder was metered using a screw feeder at a rate of 1300 g./min. to the hopper as shown in Figs. 1 and 2. A solution comprising 43% by weight of the GMA co-polymer as described above, dissolved in toluene, was metered with a peristaltic pump at a rate of 242 g./min. A first gas stream of nitrogen at a pressure of 100 psig (7.9 bar) and at a temperature of 240° C was injected through the flow restrictor. The GMA co-polymer in toluene solution coated the DDDA particles in the zone of turbulence simultaneously with the flashing of the toluene solution to the gaseous phase as it was contacted by the heated nitrogen gas stream. The mean residence time in the zone of turbulence was 150 milli-seconds.

The DDDA particles were collected and found to be substantially encapsulated by the GMA co-polymer. The particles had an average coating of 8% by weight of the GMA co-polymer, i.e., the coating was 8% of the total weight of the coated particle. Total feed of the coating material (i.e., 43% by weight of the GMA co-polymer described above, dissolved in toluene) was 18.6% based upon the weight of the DDDA.

The collected sample of coated DDDA particles was incorporated into a standard powder coating test formulation, coated onto a metal body panel, and then baked in a curing oven equipped with a collection device to measure volatiles by head space gas chromatography. The sample yielded reductions in DDDA volatiles of 80% by weight. The sample gave a cured coating with good gloss, no pitting, and good flow characteristics during curing in the bake oven.

Additional samples were prepared and tested in the manner described above. Particles encapsulated with an average coating of 11.1% by weight of the GMA co-polymer yielded a reduction in DDDA volatiles of 85%. Particles encapsulated with an average coating of 4.7% by weight of the GMA co-polymer yielded reduction in DDDA volatiles of 50%.

## EXAMPLE 2

This Example is directed to encapsulating calcium carbonate with wood rosin. Calcium carbonate powder with a mean particle size of 10 micrometers (μ) was coated with wood rosin using the apparatus as shown in Figs. 1 and 2, and as described above.

Wood rosin, having a melting point of 120° C, was heated to 140° C and held at this temperature in an insulated bath. This wood rosin was metered with a peristaltic pump at a rate of 681 g/min. The atomizing air was heated to 140° C and used at 100 psig (7.9 bar).

The calcium carbonate was metered in a screw feeder at a rate of 11,340 g/min to the hopper of the apparatus as shown in Figs. 1 and 2. The wood rosin encapsulated the calcium carbonate particle at a coating level of 6%.

Uncoated calcium carbonate exposed to HCl will produce carbon dioxide gas due to chemical reaction. Encapsulation was proven by placing the encapsulated particles in a bath of hydrochloric acid (HCl). There was no immediate effervescence from the calcium carbonate indicating the complete surface protection provided by the wood rosin.

## EXAMPLE 3

This Example is directed to a sulfonylurea herbicide coated with either wax or rosin coatings, which were metered in the form of a melt. In this Example, Technical L5300 (tribenuron methyl) sulfonylurea herbicide, having a particle size ranging from about 2 to about 40 micrometers (μ), was metered in a screw feeder at a rate of 600 g./min.

Sulfonylurea herbicide was coated with rosin at 190° C, metered with a gear pump at a rate of 75.6 g./min., corresponding to a coating level of 12.6% rosin, i.e., the weight of the rosin coating was 12.6% of the weight of the coated particle. A second batch of sulfonylurea herbicide was coated with wax at 110° C, metered with a peristaltic pump at a rate of 56.4 g./min., corresponding to a coating level of 9.4% wax. The wax was a mixture of a partially oxidized, low molecular weight polyethylene (EPOLENE E10) and paraffin. A first gas stream comprising nitrogen was injected through a flow restrictor, where the gas stream was at a pressure of 38-40 psi (3.62-3.76 bar) just before the flow restrictor.

Sulfonylurea herbicides are normally degraded in the presence of hormonal/phenoxy herbicides, such as sodium 2,4-D and 2,4-D acid. Thus, the effectiveness of the coatings to inhibit this degradation was tested by measuring the degradation of sulfonylurea herbicide when mixed in 1/20 weight mixtures with sodium 2,4-D and 2,4-D acid and aged for three weeks at 45° C. Uncoated sulfonylurea herbicide was tested in the same manner to provide a control. The results were as follows:

| PERCENTAGE RELATIVE DEGRADATION OF L5300 | | | |
|---|---|---|---|
| | | 12.6% | 9.4% |
| | Uncoated | Rosin Coating | Wax Coating |
| Sodium 2,4-D | 38.4% | 0.0% | 0.0% |
| 2,4-D Acid | 21.2% | 0.0% | 1.7% |

Thus, the results show coating at a level of 12.6% by weight essentially resulted in encapsulation of the particles. Generally, degradation of 5% or less is suitable for such formulations.

Additionally, the wax and rosin coated sulfonylurea was mixed with an ethoxylated silicone surfactant and water, and was then sprayed onto wild buckwheat, spring wheat and wild mustard. Both efficacy for weed injury and safety for the spring wheat was equivalent for the coated and uncoated sulfonylurea herbicides.

## EXAMPLE 4

This Example is directed to a relatively water soluble herbicide, bromacil (5-bromo-3-sec-butyl-6-methyluracil) (IUPAC), having 815 ppm. water solubility, coated with stearic acid. In this Example, technical solid particles of bromacil, having a particle size range from less than one micrometer to 30 micrometers maximum diameter, was metered in a screw feeder at a rate of 1000 g./min.

The bromacil was coated with stearic acid in the form of a melt at a rate of 60 g./min. The stearic acid, which had a melting point of 70° C. was heated to 90° C and held at this temperature in a storage container, such as storage container 20 as described above. This first pass coated material was collected and coated a second time, corresponding to a coating level of 6% and 12% coating level on the first pass and second pass, respectively, although it should be noted that it is not necessary to coat the particles with more than one pass in order to encapsulate the particles.

A gas stream comprising nitrogen was injected through a flow restrictor, such as that shown in Figs. 1 and 2. The gas stream was at a pressure of 70 psi (5.8 bar) just before the flow restrictor.

Particle size measurements were done using a Sympatec Helos. The Helos uses forward light scattering to measure particle size distribution. A well dispersed stream of dry particles is passed through a columnated laser beam. The resulting diffraction pattern is deconvoluted into a size distribution. Table 1 shows the particle size analysis of uncoated bromacil, first pass coated bromacil and second pass coated bromacil.

TABLE 1

| Microns Diameter of Coated vs. Uncoated Bromacil | | | |
|---|---|---|---|
| Particle Fraction | Uncoated Bromacil Zero Stearic Acid | First Pass 6% stearic acid | Second Pass 11.9% stearic acid |
| 5% smaller than | 0.7 | 0.8 | 0.9 |
| 10% smaller than | 1.0 | 1.2 | 1.3 |
| 16% smaller than | 1.3 | 1.8 | 1.9 |
| 50% smaller than | 4.6 | 5.5 | 5.4 |
| 90% smaller than | 12.0 | 20.0 | 19.3 |

Each of the size fractions of bromacil was coated, and the size analysis shows that the coated particles exist as individual discrete, non-agglomerated particles. The tiniest particles were still present, but with a slight increase in size as a result of being coated.

Additional advantages and modifications will readily occur to those skilled in the art. The invention, in its broader aspects, is therefore not limited to the specific details, representative apparatus and illustrative Examples shown and described. Accordingly, departures may be made from such details without departing from the scope of the general inventive concept as defined by the appended claims.

## Claims

1. A process for coating a solid particle with a coating material, comprising the steps of:

(a) metering a liquid composition comprising the coating material into a first chamber and a flow restrictor at a downstream end of the first chamber;
(b) injecting a first gas stream through the first chamber and the flow restrictor and into a second chamber at the downstream end of the first chamber, the second chamber having an inner diameter surrounding the first chamber, the injecting occurring concurrently with step (a) to create a zone of turbulence at the outlet of the flow restrictor, the zone of turbulence being enclosed by the second chamber and having a length that is about 10 times the inner diameter of the second chamber, thereby atomizing the liquid composition;
(c) heating the first gas stream to a temperature greater than the liquid composition prior to injecting the first gas stream through the first chamber and flow restrictor to thereby heat the liquid composition therein; and
(d) adding a solid particle to the zone of turbulence in the second chamber at the downstream end of the first chamber concurrently with steps (a) and (b) to mix the solid particle with the heated and atomized liquid composition, wherein the mixing in the zone of turbulence coats the solid particle with the coating material in a single pass and conveys the coated particles through the second chamber.

**2.** The process of claim 1, wherein the liquid composition comprises a liquid and a solid.

**3.** The process of claim 2, wherein the solid is dissolved in the liquid.

**4.** The process of claim 2, wherein the solid is undissolved in the liquid.

**5.** The process of any one of claims 2 to 4, wherein the first gas stream is heated to a temperature sufficient to vaporize the liquid and to leave the solid remaining and the mixing at the zone of turbulence coats the solid particle with the remaining solid.

**6.** The process of claim 5, wherein the liquid composition comprises a melt.

**7.** The process of claim 6, wherein the mixing at the zone of turbulence coats the solid particle with the melt.

**8.** The process of claim 1, further comprising the step of adding a second gas stream to the second chamber upstream of the zone of turbulence, the second gas stream having a temperature less than the temperature of the liquid composition for cooling and conveying the coated solid particles.

**9.** The process of claim 1, wherein the step of injecting the heated first gas stream further comprises accelerating the first gas stream through the flow restrictor to at least one half the velocity of sound prior to entering the flow restrictor.

**10.** The process of claim 1, wherein the average residence time of the solid particle within the zone of turbulence is less than 250 milli-seconds.

**11.** The process of claim 10, wherein the average residence time is in the range of 25 to 250 milli-seconds.

**12.** The process of claim 1, wherein the step of adding a solid particle comprises adding a solid particle having a temperature less than the heated liquid composition wherein the solid particle facilitates cooling the coating material to form a solid coating on the solid particle.

**13.** The process of claim 1, wherein the step of metering a liquid composition comprises metering a quantity of coating material so that when it coats the solid particle, the coating material makes up more than 6% of the total weight of the coated particle to thereby substantially encapsulate the solid particle.


**Patentansprüche**

**1.** Verfahren zum Beschichten eines Feststoffpartikels mit einem Beschichtungsstoff, umfassend die Schritte:

(a) Zumessen einer den Beschichtungsstoff aufweisenden flüssigen Zusammensetzung zu einer ersten Kammer und einem Strömungsbegrenzer am austrittseitigen Ende der ersten Kammer;

(b) Eindüsen eines ersten Gasstroms durch die erste Kammer und den Strömungsbegrenzer und in eine zweite Kammer am austrittseitigen Ende der ersten Kammer, wobei die zweite Kammer einen Innendurchmesser hat, der die erste Kammer umgibt und wobei das Eindüsen gleichzeitig mit Schritt (a) erfolgt, um am Auslass des Strömungsbegrenzers eine Wirbel zone zu erzeugen, wobei die Wirbelzone von der zweiten Kammer eingeschlossen ist und eine Länge hat, die etwa das zehnfache des Innendurchmessers der zweiten Kammer beträgt, wodurch die flüssige Zusammensetzung zerstäubt wird;

(c) Erhitzen des ersten Gasstroms auf eine Temperatur, die höher ist als die der flüssigen Zusammensetzung, vor dem Eindüsen des ersten Gasstroms durch die erste Kammer und den Strömungsbegrenzer, um dadurch darin die flüssige Zusammensetzung zu erhitzen; sowie

(d) Zugeben eines Feststoffpartikels zu der Wirbelzone in der zweiten Kammer am austrittseitigen Ende der ersten Kammer gleichzeitig mit den Schritten (a) und (b), um das Feststoffpartikel mit der erhitzten und zerstäubten flüssigen Zusammensetzung zu mischen, wobei das Mischen in der Wirbelzone das Feststoffpartikel mit dem Beschichtungsstoff in einem einzigen Durchgang beschichtet und die beschichteten Partikel durch die zweite Kammer befördert.

2. Verfahren nach Anspruch 1, bei welchem die flüssige Zusammensetzung eine Flüssigkeit und einen Feststoff aufweist.

3. Verfahren nach Anspruch 2, bei welchem der Feststoff in der Flüssigkeit aufgelöst ist.

4. Verfahren nach Anspruch 2, bei welchem der Feststoff in der Flüssigkeit ungelöst ist.

5. Verfahren nach einem der vorgenannten Ansprüche 2 bis 4, bei welchem der erste Gasstrom auf eine ausreichende Temperatur erhitzt wird, um die Flüssigkeit zu verdampfen und den verbleibenden Feststoff zurückzulassen, wobei das Mischen in der Wirbel zone das Feststoffpartikel mit dem verbleibenden Feststoff beschichtet.

6. Verfahren nach Anspruch 5, bei welchem die flüssige Zusammensetzung eine Schmelze umfasst.

7. Verfahren nach Anspruch 6, bei welchem das Mischen in der Wirbelzone das Feststoffpartikel mit der Schmelze beschichtet.

8. Verfahren nach Anspruch 1, ferner umfassend den Schritt der Zugabe eines zweiten Gasstroms in die zweite Kammer an der Eintrittseite der Wirbelzone, wobei der zweite Gasstrom eine Temperatur hat, die niedriger ist als die Temperatur der flüssigen Zusammensetzung, und zwar zum Kühlen und Fördern der beschichteten Feststoffpartikel.

9. Verfahren nach Anspruch 1, wobei der Schritt des Eindüsens des erhitzten ersten Gasstroms ferner das Beschleunigen des ersten Gasstroms durch den Strömungsbegrenzer auf mindestens die halbe Schallgeschwindigkeit vor dem Eintreten in den Strömungsbegrenzer umfasst.

10. Verfahren nach Anspruch 1, bei welchem die mittlere Verweilzeit des Feststoffpartikels in der Wirbel zone weniger als 250 Millisekunden beträgt.

11. Verfahren nach Anspruch 10, bei welchem die mittlere Verweilzeit im Bereich von 25 bis 250 Millisekunden liegt.

12. Verfahren nach Anspruch 10, bei welchem der Schritt der Zugabe eines Feststoffpartikels die Zugabe eines Feststoffpartikels umfasst, das eine niedrigere Temperatur hat als die erhitzte flüssige Zusammensetzung, wobei das Feststoffpartikel das Kühlen des Beschichtungsstoffes erleichtert, um auf dem Feststoffpartikel eine fest Beschichtung zu erzeugen.

13. Verfahren nach Anspruch 10, bei welchem der Schritt des Zumessens einer flüssigen Zusammensetzung das Zumessen einer Menge von Beschichtungsstoff umfasst, so dass der Beschichtungsstoff, wenn er das Feststoffpartikel beschichtet, mehr als 6% des Gesamtgewichts des beschichteten Partikels ausmacht, um dadurch das Feststoffpartikel im wesentlichen zu kapseln.

**Revendications**

1. Procédé pour enrober une particule solide avec un matériau d'enrobage, comprenant les étapes suivantes:

(a) doser une composition liquide comprenant le matériau d'enrobage dans une première chambre et un étrangleur de débit à une extrémité avant de la première chambre;

(b) injecter un premier courant gazeux par la première chambre et l'étrangleur de débit et, dans une deuxième chambre à l'extrémité aval de la première chambre, la deuxième chambre ayant un diamètre interne entourant la première chambre, l'injection se produisant simultanément à l'étape (a) pour créer une zone de turbulence à la sortie de l'étrangleur de débit, la zone de turbulence étant entourée par la deuxième chambre et ayant une longueur qui est égale à environ 10 fois le diamètre interne de la deuxième chambre, en pulvérisant ainsi la composition liquide;

(c) chauffer le premier courant gazeux à une température supérieure à celle de la composition liquide avant l'injection du premier courant gazeux par la première chambre et l'étrangleur de débit pour chauffer ainsi la composition liquide dans celui-ci; et

(d) ajouter une particule solide dans la zone de turbulence de la deuxième chambre à l'extrémité aval de la première chambre, simultanément aux étapes (a) et (b) pour mélanger la particule solide avec la composition liquide chauffée et pulvérisée, où le mélange dans la zone de turbulence enduit la particule solide avec le matériau d'enrobage en une seule passe et transporte les particules enduites à travers la deuxième chambre.

2. Procédé selon la revendication 1, dans lequel la composition liquide comprend un liquide et un solide.

3. Procédé selon la revendication 2, dans lequel le solide est dissous dans le liquide.

4. Procédé selon la revendication 2, dans lequel le solide n'est pas dissous dans le liquide.

5. Procédé selon l'une quelconque des revendications 2 à 4, dans lequel le premier courant gazeux est chauffé à une température suffisante pour vaporiser le liquide et pour laisser le solide et le mélange à la zone de turbulence enrobe la particule solide avec le solide restant.

6. Procédé selon la revendication 5, dans lequel la composition liquide comprend un bain fondu.

7. Procédé selon la revendication 6, dans lequel le mélange à la zone de turbulence enrobe la particule solide avec le bain fondu.

8. Procédé selon la revendication 1, comprenant en outre l'étape d'ajouter un deuxième courant gazeux dans la deuxième chambre en amont de la zone de turbulence, le deuxième courant gazeux ayant une température inférieure à la température de la composition liquide, pour refroidir et transporter les particules solides enrobées.

9. Procédé selon la revendication 1, dans lequel l'étape de l'injection du premier courant gazeux chauffé comprend en outre l'accélération du premier courant gazeux par l'étrangleur de débit jusqu'à au moins la moitié de la vitesse du son avant de pénétrer dans l'étrangleur de débit.

10. Procédé selon la revendication 1, dans lequel le temps de séjour moyen de la particule solide dans la zone de turbulence est de moins de 250 millisecondes.

11. Procédé selon la revendication 10, dans lequel le temps de séjour moyen est compris dans l'intervalle allant de 25 à 250 ms.

12. Procédé selon la revendication 10 dans lequel l'étape de l'addition des particules solides comprend l'addition d'un particule solide ayant une température inférieure à celle de la composition liquide chauffée, dans lequel la particule solide facilite le refroidissement du matériau d'enrobage pour former un enrobage solide sur la particule solide.

13. Procédé selon la revendication 10, dans lequel l'étape du dosage de la composition liquide comprend le dosage d'une quantité de matériau d'enrobage, de façon que quand il enrobe la particule solide, le matériau d'enrobage constitue plus de 6% du poids total de la particule enrobée, de manière à essentiellement encapsuler la particule solide.

FIG.1

EP 0 847 302 B1

FIG.2

EP 0 847 302 B1